(19) Europäisches Patentamt / European Patent Office / Office européen des brevets

(11) **EP 4 555 035 B1**

(12) **EUROPÄISCHE PATENTSCHRIFT**

(45) Veröffentlichungstag und Bekanntmachung des Hinweises auf die Patenterteilung:
**22.10.2025 Patentblatt 2025/43**

(21) Anmeldenummer: **22750695.3**

(22) Anmeldetag: **11.07.2022**

(51) Internationale Patentklassifikation (IPC):
**C09K 5/14** *(2006.01)* **C08G 77/04** *(2006.01)*
**C09J 183/04** *(2006.01)* **C08K 3/02** *(2006.01)*
**C08L 83/04** *(2006.01)*

(52) Gemeinsame Patentklassifikation (CPC):
(C-Sets verfügbar)
**C09K 5/14; C08L 83/04; C09J 183/04;** C08G 77/04;
C08K 2003/023; C08K 2201/003; C08K 2201/016
(Forts.)

(86) Internationale Anmeldenummer:
**PCT/EP2022/069349**

(87) Internationale Veröffentlichungsnummer:
**WO 2024/012656 (18.01.2024 Gazette 2024/03)**

(54) **SILIZIUMHALTIGE WÄRMELEITPASTEN**

SILICON-CONTAINING THERMALLY CONDUCTIVE PASTES

PÂTES THERMOCONDUCTRICES CONTENANT DU SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.05.2025 Patentblatt 2025/21**

(73) Patentinhaber: **Wacker Chemie AG
81671 München (DE)**

(72) Erfinder: **KNOER, Sebastian
84547 Emmerting (DE)**

(74) Vertreter: **Mieskes, Klaus Theoderich et al
Wacker Chemie AG
Gisela-Stein-Straße 1
81671 München (DE)**

(56) Entgegenhaltungen:
**EP-A1- 1 788 031 US-A1- 2016 122 611**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

     C-Sets
     **C08L 83/04, C08L 83/00, C08K 3/02;**
     **C09J 183/04, C08L 83/00, C08K 3/02**

**Beschreibung**

Die vorliegende Erfindung betrifft wärmeleitfähige Siliconzusammensetzungen, deren Herstellung und Verwendung.

**Stand der Technik**

Wärmeleitfähige Siliconzusammensetzungen finden breite Anwendung für das Thermomanagement in der Automobil- und Elektronikindustrie. Wichtige Darreichungsformen umfassen beispielsweise wärmeleitfähige Klebstoffe, Wärmeleitpads, Gap Filler, Vergussmassen und Pasten. Eine Wärmeleitpaste ist eine Paste, welche die Wärmeübertragung zwischen zwei Objekten, z. B. der Kühlfläche/dem Gehäuse eines Integrierten Schaltkreises und einem Kühlkörper, verbessert. Die Montageflächen von Kühlkörpern und Bauteilen enthalten stets mehr oder weniger tiefe Unebenheiten und Abweichungen von der Planizität. Wärmeleitpasten füllen diese Unebenheiten auf und ermöglichen somit eine bessere Wärmeübertragung auf Kühlgehäuse oder Kühlkörper.

Der Stand-der-Technik kennt unterschiedliche thermoleitfähige Füllstoffe, die zur Erhöhung der Wärmeleitfähigkeit von Siliconzusammensetzungen zugegeben werden. Diese weisen jedoch gravierende Nachteile auf. Keramische Füllstoffe, wie beispielsweise Aluminiumoxid, haben eine sehr hohe Dichte und erhöhen damit das Gewicht der Bauteile sehr stark. Außerdem sind sie vergleichsweise teuer. Metallische Füllstoffe, wie beispielsweise Aluminiumpulver oder Silberpulver, sind elektrisch leitfähig, was für viele Anwendungen nicht akzeptabel ist. Viele Metalle und Legierungen sind zudem vergleichsweise teuer.

Auch viele weitere, hoch wärmeleitfähige Füllstoffe, wie beispielsweise Carbonanotubes, Bornitrid und Aluminiumnitrid, können, aufgrund ihres vergleichsweise hohen Preises, nur eingeschränkt, in geringen Mengen oder speziellen Anwendungen verwendet werden.

Der Stand der Technik kennt verschiedene wärmeleitfähige Siliconzusammensetzungen, die Siliziumpartikel als wärmeleitfähigen Füllstoff enthalten. Diese sind vergleichsweise leicht und kostengünstig. Zudem besitzt Silizium als Halbleiter eine äußerst geringe elektrische Leitfähigkeit. Allerdings sind die Siliziumpartikel nach dem Stand-der-Technik nicht für die Verwendung in Elektrofahrzeugen und elektronischen Bauteilen geeignet:

Die im Stand der Technik verwendeten Si-Partikel werden zumeist über Mahlverfahren gewonnen. Nachteilig ist, dass solche Partikel eine große Oberfläche haben und sehr viel Polymer binden. Dadurch erhöht sich die Viskosität der Siliconzusammensetzung sehr stark. Es können nur Mischungen mit vergleichsweise niedrigen Füllgraden und niedriger Wärmeleitfähigkeit erzeugt werden. Bei höheren Füllgraden wird die Zusammensetzung sehr steif und kann mit klassischen Verfahren, wie z.B. Dispenser, nicht mehr verarbeitet werden. Auch zeigt sich, dass Siliconzusammensetzungen enthaltend gemahlene Siliziumpartikel vergleichsweise stark brennbar sind.

Die Verwendung von Siliziumpartikel kleiner 30 μm ist nachteilig, denn solch kleine Partikel weisen eine vergleichsweise geringe Mindestzündenergie auf und sind dadurch staubexplosionsgefährlich und erfordern aufwändige und kostenintensive Sicherheitsvorkehrungen in der betrieblichen Verarbeitung.

JP2019131669A2 lehrt die Verwendung von 0,1 - 200 μm großen metallischen Si-Partikeln mit elektrisch isolierender Beschichtung als thermoleitfähige Füllstoffe für Siloxan-freie organische Harze. Die Partikel können über thermische Zersetzung, Schmelz- oder Mahlverfahren hergestellt werden, oder aus Polier- oder Schleifverfahren anfallen. Die Partikel werden in einem gesonderten Verfahrensschritt mit einer elektrisch isolierenden Beschichtung versehen. In den Beispielen offenbart JP2019131669A2 organische Harze, die bis zu 65 Vol-% gemahlene Si-Partikel mit einer mittleren Partikelgröße von 32 μm enthalten und eine Wärmeleitfähigkeit von bis zu 7 W/mK aufweisen. Nachteilig ist die Verwendung von gemahlenen Partikeln, die vergleichsweise stark brennbar sind. Die offenbarten Vulkanisate sind nicht elastisch und deswegen nicht für die Verwendung als Gap Filler in Lithium-Ionen-Batterien geeignet.

US2016122611 lehrt elektrisch und thermisch leitfähige Siliconelastomerzusammensetzungen enthaltend einen thermisch leitfähigen Füllstoff kleiner 30 μm, besonders bevorzugt 2 bis 8 μm, in Kombination mit einem Ruß. Beim thermisch leitfähigen Füllstoff kann es sich um ein Siliziumpulver handeln. Offenbart werden in den Beispielen Zusammensetzungen enthaltend bis zu 60 Gew.-% gemahlene Si-Partikel mit einer mittleren Partikelgröße von 5 μm bzw. bis zu 46 Gew.-% gemahlene Si-Partikel mit einer mittleren Partikelgröße von 40 μm. Die Wärmeleitfähigkeit der Zusammensetzungen beträgt bis zu 1,0 W/mK. Nachteilig ist die Verwendung von gemahlenen Partikeln, die vergleichsweise stark brennbar sind und nur Zusammensetzungen mit vergleichsweise geringem Füllgrad und geringer Wärmeleitfähigkeit erlauben.

US2007135555 lehrt hitzevernetzende thermisch leitfähige Siliconzusammensetzungen enthaltend sphärische metallische Si-Partikel, die über ein Schmelzverfahren hergestellt werden, oder gemahlene, metallische Si-Partikel, jeweils mit einer mittleren Partikelgröße von bis zu 100 μm, besonders bevorzugt von 2 bis 25 μm. Offenbart werden in den Beispielen Zusammensetzungen enthaltend bis zu 71 Gew.-% gemahlene Si-Partikel mit einer mittleren Partikelgröße von 12 μm bzw. bis zu 71 Gew.-% sphärische Si-Partikel mit einer mittleren Partikelgröße von 5 μm, jeweils in Kombination mit oxidischen Füllstoffen, wie z.B. $Fe_2O_3$ oder $Al_2O_3$. Die Wärmeleitfähigkeit der Zusammensetzungen beträgt bis zu 1,2 W/mK. Nachteilig ist die Verwendung von sehr kleinen Si-Partikeln, die vergleichsweise stark brennbar sind und nur Zusammensetzungen mit vergleichsweise geringem Füllgrad und geringer Wärmeleitfähigkeit erlauben.

US2007117920 lehrt hitzevernetzende thermisch leitfähige Siliconzusammensetzungen enthaltend sphärische oder gemahlene, metallische Si-Partikel mit einer mittleren Partikelgröße von 2 bis 100 $\mu$m, besonders bevorzugt 2 bis 25 $\mu$m. Offenbart werden in den Beispielen Zusammensetzungen enthaltend bis zu 67 Gew.-% gemahlene Si-Partikel mit einer mittleren Partikelgröße von 5 bis 12 $\mu$m, als alleinigen Füllstoff oder in Kombination mit $Al_2O_3$. Die Viskosität der Mischungen liegt im Bereich von 30.000 bis 260.000 mPa•s bei einer Wärmeleitfähigkeit von bis zu 1,0 W/mK. Nachteilig ist die Verwendung von sehr kleinen Si-Partikeln, die vergleichsweise stark brennbar sind und nur Zusammensetzungen mit vergleichsweise hoher Viskosität, geringem Füllgrad und geringer Wärmeleitfähigkeit erlauben.

US2001051673 lehrt hitzevernetzende thermisch leitfähige Siliconelastomerzusammensetzungen enthaltend plättchenförmige Partikel mit einer mittleren Partikelgröße von 0,1 bis 350 $\mu$m oder runde Partikel mit einer mittleren Partikelgröße von 0,1 bis 50 $\mu$m, bevorzugt 0,5 bis 20 $\mu$m, aus einer magnetischen Silicium-haltigen Fe-Si-Legierung, wobei Plättchen bevorzugt sind. Offenbart werden in den Beispielen Zusammensetzungen enthaltend 30 Vol.-% sphärische Fe-Si-Partikel, bestehend aus 97 Gew.-% Fe und 3 Gew.-% Si, mit einer mittleren Partikelgröße von 8 $\mu$m in Kombination mit 40 Vol.-% $Al_2O_3$-Partikel. Die Wärmeleitfähigkeit beträgt 4,0 W/mK. Nachteilig ist die Verwendung von sehr kleinen Fe-Si-Partikeln mit sehr hohem Eisengehalt. Dadurch sind die Partikel elektrisch leitfähig, weisen eine vergleichsweise hohe Dichte auf und sind vergleichsweise stark brennbar.

Nachteilig ist zudem die Verwendung großer Mengen an $Al_2O_3$, wodurch die Dichte der Zusammensetzung sehr hoch ist.

US4292223 lehrt vernetzbare thermisch leitfähige Siliconelastomerzusammensetzungen enthaltend metallische Partikel, wie z.B. Silicium, wobei Legierungen bevorzugt sind, mit einer mittleren Partikelgröße von 40 bis 300 $\mu$m. Die Partikel können sphärisch oder unregelmäßig geformt sein, mit einem Länge zu Breite Verhältnis von bis zu 8 (entsprechend einem Aspekt-Verhältnis (b/l) gemäß ISO 9276-6 von größer oder gleich 0,125). Daraus ergibt sich eine sehr breite Definition der möglichen Partikelform, denn die Partikel können sowohl sphärisch sein, entsprechend einem Länge zu Breite Verhältnis von 1, als auch stäbchenförmig, wobei die Länge um Faktor 8 größer sein kann, als die Breite. Offenbart werden Zusammensetzungen enthaltend 28 Gew.-% gemahlene Si-Partikel mit einer mittleren Partikelgröße von 44 $\mu$m, wobei das b/l Verhältnis nicht offenbart wird. Nachteilig ist die Verwendung von gemahlenen Partikeln, die vergleichsweise stark brennbar sind. Zudem weisen gemahlene Partikel eine vergleichsweise große Oberfläche auf, weswegen Zusammensetzungen enthaltend gemahlene Partikel eine vergleichsweise hohe Viskosität aufweisen und schwierig zu verarbeiten sind. Die vernetzten Materialien sind wenig flexibel und brüchig.

US2006228542 beschreibt thermisch leitfähige Elastomere, welche zwei unterschiedlich große thermisch leitfähige Füllstoffe enthalten. Das Elastomer kann u.a. ein Silicon sein. Der erste thermisch leitfähige Füllstoff wird aus einer elektrisch isolierenden und thermisch leitfähigen Keramik gebildet. Als eines von mehreren Beispielen für ein geeignetes Keramik-Material wird aus Versehen "Silicon" statt "Silica" aufgezählt. Dem Fachmann ist beim Lesen dieser Offenbarung aber ganz klar, dass tatsächlich Silica-Keramiken gemeint sind, da Silizium-Metall keine Keramik ist, ihm jedoch Quarzgutkeramiken (also $SiO_2$-Keramiken) sehr wohl bekannt sind. Der erste thermisch leitfähige Füllstoff hat darüber hinaus eine monomodale Verteilung und eine mittlere Partikelgröße von mindestens 20 $\mu$m. Es wird offenbart, dass der erste Füllstoffpartikel spheroidal oder sphärisch ist, und auch hohl sein kann. Er weist eine bevorzugte mittlere Partikelgröße von 30 bis 95 $\mu$m mit einer Standardabweichung von 15 bis 40 $\mu$m auf. Dies ist eine extrem unspezifische Definition der möglichen Verteilungsbreite, so dass die Partikel eine sehr enge oder sehr breite Verteilung aufweisen könnten.

Dies zeigt sich beispielhaft mit folgenden Ausführungen: Eine Standardabweichung von 40 $\mu$m bei einer mittleren Partikelgröße von 30 $\mu$m entspricht einer sehr breiten Korngrößenverteilung, während eine Standardabweichung von 15 $\mu$m bei einer mittleren Partikelgröße von 95 $\mu$m einer sehr schmalen Korngrößenverteilung entspricht. In US2006228542 finden sich keine Lehren über den Einfluss der Standardabweichung der Korngrößenverteilung des Füllstoffs auf die Eigenschaften des Elastomers.

Aufgabe der vorliegenden Erfindung war daher die Bereitstellung nicht-vernetzbarer, wärmeleitfähiger Siliconzusammensetzungen, die die oben genannten Nachteile des Standes-der-Technik nicht zeigen, und die Eigenschaften einer geringen Dichte, niedriger Kosten und hoher Wärmeleitfähigkeit vereinen.

Diese Aufgabe wird durch die erfindungsgemäßen, nicht-vernetzbaren, wärmeleitfähigen Siliconzusammensetzungen (Y) gelöst, welche vergleichsweise große Si-Partikel enthalten mit einer mittleren Partikelgröße von 30 bis 200 $\mu$m, mit überwiegend rundlicher Form, und die gleichzeitig eine besonders große bzw. breite Partikelverteilungsbreite aufweisen. Vollkommen überraschend wurde in Experimenten gefunden, dass diese erfindungsgemäßen, nicht-vernetzbaren, wärmeleitfähigen Siliconzusammensetzungen (Y) eine deutlich reduzierte Brennbarkeit aufweisen.

Als Si-Partikel mit "überwiegend rundlicher" Form sind im Rahmen der vorliegenden Erfindung solche zu verstehen, die eine kugelige bis ovale Form aufweisen mit glatt verlaufenden Oberflächen. Man könnte sie auch als kartoffelförmig bezeichnen. Figur 1 zeigt beispielhaft die erfindungsgemäße überwiegend rundliche Form dieser Si-Partikel. Nicht erfindungsgemäße Si-Partikel-Formen zeigen die Figur 2 mit "spratzigen" Partikeln, die Figur 3 mit "nodularen" Partikeln sowie Figur 4 mit "kantigen" und "spitzen" Partikeln. Erfindungsgemäße metallische Si-Partikel sind somit weder spratzig, nodular noch kantig oder spitz. Sie können solche Partikel aber im Umfang einer Verunreinigung enthalten, ohne dass ihre erfindungsgemäße Wirkung gestört wird.

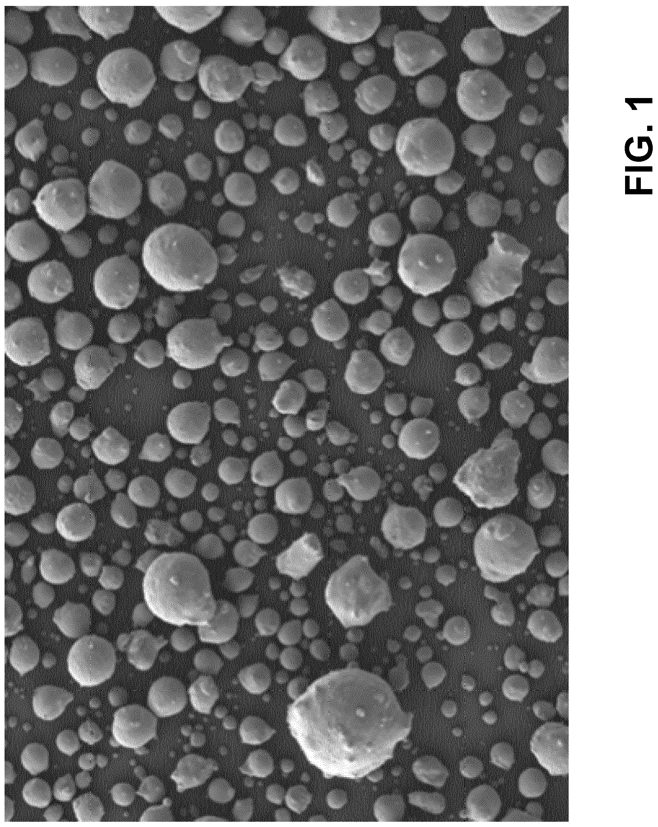

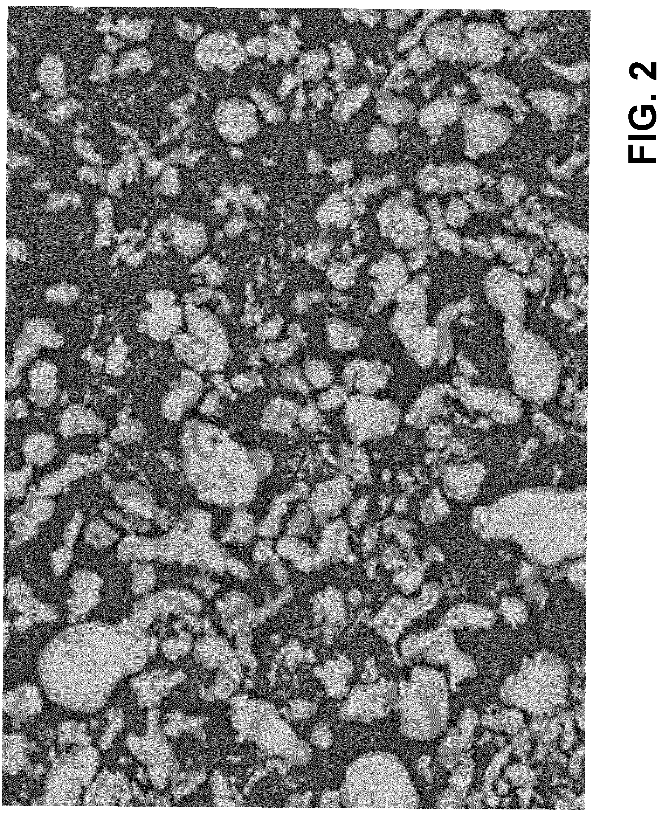

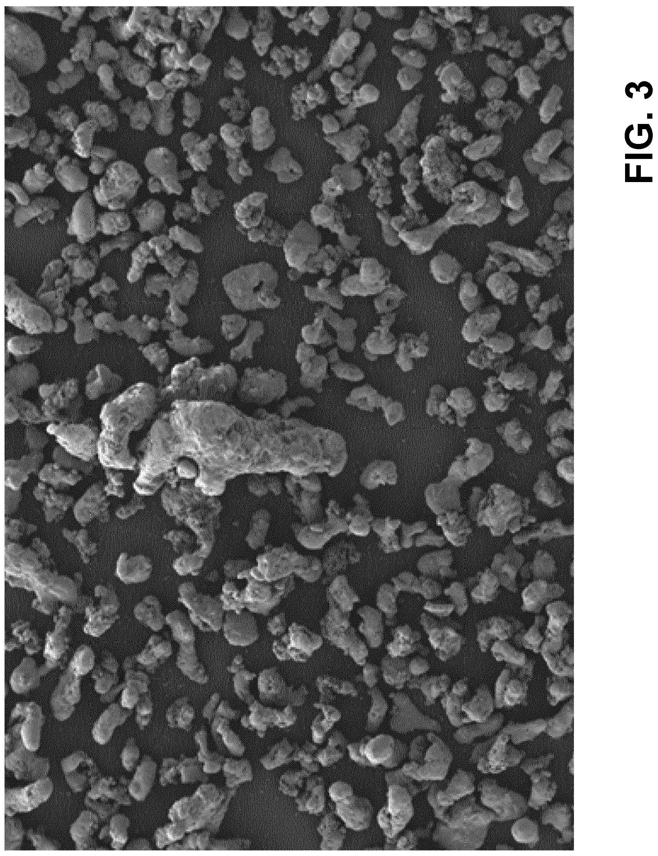

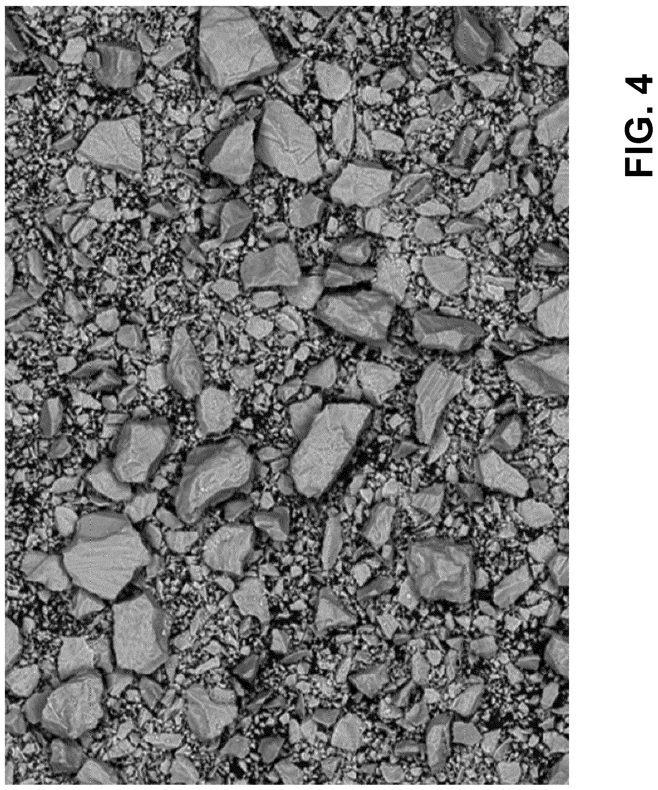

Die Eigenschaften der Si-Partikel gemäß Figuren 1 bis 4 sind zudem in folgender Tabelle wiedergegeben.

| Figur | x50 ($\mu$m) | b/l | SPHT | |
|-------|--------------|------|------|----------------------|
| 1 | 98 | 0,84 | 0,87 | erfindungsgemäß |
| 2 | 38 | 0,68 | 0,70 | nicht erfindungsgemäß |
| 3 | 73 | 0,67 | 0,72 | nicht erfindungsgemäß |
| 4 | 37 | 0,67 | 0,76 | nicht erfindungsgemäß |

**Gegenstand der vorliegenden Erfindung ist** eine nicht-vernetzbare, wärmeleitfähige Siliconzusammensetzung (Y) enthaltend

- 5-50 Vol.-% einer nicht-vernetzbaren Siliconzusammensetzung (S) und
- 50-95 Vol.-% mindestens eines thermisch leitfähigen Füllstoffes (Z) mit einer Wärmeleitfähigkeit von mindestens 5 W/mK, mit der Maßgabe, dass

die nicht-vernetzbare, wärmeleitfähige Siliconzusammensetzung (Y) eine thermische Leitfähigkeit von mindestens 0,6 W/mK hat, und dass
mindestens 20 Vol-% metallische Siliziumpartikel als thermisch leitfähige Füllstoffe (Z) enthalten sind, welche folgende Merkmale erfüllen:

a) ihr mittlerer Durchmesser x50 liegt im Bereich 30-200 $\mu$m;

b) sie sind überwiegend rundlich, und dadurch gekennzeichnet, dass das Breite/Länge-Verhältnis (Aspekt-Verhältnis b/l) mindestens 0,76 beträgt;

c) ihre Verteilungsbreite SPAN ((x90-x10)/x50) ist mindestens 0,28.

Im Rahmen dieser Erfindung sind die Begriffe wärmeleitfähig, thermoleitfähig oder thermisch leitfähig gleichbedeutend.

Als thermisch leitfähige Füllstoffe (Z), sind im Rahmen dieser Erfindung alle Füllstoffe mit einer thermischen Leitfähigkeit von mindestens 5 W/mK zu verstehen.

Als wärmeleitfähige Siliconzusammensetzung (Y) sind im Rahmen dieser Erfindung solche Siliconzusammensetzungen zu verstehen, die die thermische Leitfähigkeit eines Füllstoff- und Additivfreien Polydimethylsiloxans, typischerweise etwa 0.2 W/mK, deutlich übertreffen, dadurch gekennzeichnet, dass sie eine thermische Leitfähigkeit von mindestens 0,6 W/mK aufweisen.

Im Rahmen dieser Erfindung beziehen sich alle Parameter, die die Partikelgröße (Parameter: mittlerer Durchmesser x50), die Partikelgrößenverteilung (Parameter: Standardabweichung Sigma und Verteilungsbreite SPAN) oder die Partikelform (Parameter: Aspekt-Verhältnis b/l und Sphärizität SPHT) beschreiben, auf eine volumenbezogene Verteilung. Die genannten Kennwerte können beispielsweise mittels dynamischer Bildanalyse gemäß ISO 13322-2 und ISO 9276-6 bestimmt werden, beispielsweise mit einem Camsizer X2 von Retsch Technology.

Dem Fachmann ist bekannt, dass die Standardabweichung nicht normiert ist und nur dann ein sinnvolles Charakteristikum zur Bewertung der Partikelgrößenverteilung unterschiedlicher Proben ist, wenn die mittleren Partikelgrößen der Vergleichsproben ungefähr gleich sind. Zur Beschreibung der relativen Breite der Partikelgrößenverteilung im Rahmen dieser Erfindung wird daher die mit der mittleren Partikelgröße x50 gewichtete Breite der Partikelgrößenverteilung verwendet, die dimensionslose Verteilungsbreite SPAN (Spanne), welche definiert ist als:

$$\text{SPAN} = (x90 - x10) / x50.$$

Das Seitenverhältnis (Aspekt-Verhältnis) dient als Kennzahl zur Beschreibung der Partikelform. Im älteren Stand der Technik wird das Aspekt-Verhältnis häufig durch das Verhältnis von Länge zu Breite (l/b) beschrieben. Daraus ergeben sich Werte von größer oder gleich 1. In der neueren Literatur, beispielsweise nach ISO 9276-6, wird das Aspekt-Verhältnis aus dem umgekehrten Verhältnis von Breite zu Länge berechnet (b/l). Daraus ergeben sich Werte von kleiner oder gleich 1. Beide Kennzahlen können durch Bildung des Kehrwerts ineinander umgerechnet werden. Im Rahmen dieser Erfindung ist das Aspekt-Verhältnis definiert als das Verhältnis der Breite zur Länge (b/l) des Partikels. Dabei ist die Partikelbreite gegeben durch $x_{c\ min}$, der kleinsten aller gemessenen maximalen Sehnen der Partikelprojektion und die Partikellänge ist gegeben durch $x_{Fe\ max}$, dem längsten Feret-Durchmesser aller gemessenen Feret-Durchmesser eines Partikels. Tiefergehende Informationen finden sich bspw. in "Operating Instructions / Manual Particle Size analysis System CAMSIZER®", Retsch Technology GmbH, 42781 Haan; Doc.Nr. CAMSIZER V0115. Daraus ergibt sich folgende Formel für das Aspekt-Verhältnis:

$$b/l = x_{c\ min} / x_{Fe\ max}$$

Die Sphärizität SPHT berechnet sich aus der Projektionsfläche A des gemessenen Partikels im Verhältnis zur Fläche eines Kreises mit dem gleichen Umfang P des projektierten Partikels gemäß folgender Formel (Tiefergehende Informationen finden sich bspw. in "Operating Instructions / Manual Particle Size analysis System CAMSIZER®", Retsch Technology GmbH, 42781 Haan; Doc.Nr. CAMSIZER V0115):

$$SPHT = 4\pi A / P^2$$

Der Kennwert SPHT entspricht dem Quadrat der Zirkularität C gemäß ISO 9276-6.

Um die Seitenzahl der Beschreibung der vorliegenden Erfindung nicht zu umfangreich zu gestalten, werden im Folgenden nur die bevorzugten Ausführungsformen der einzelnen Merkmale aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist.

## Nicht-vernetzbare Siliconzusammensetzung (S)

Nicht-vernetzbare Siliconzusammensetzung (S) enthaltet:
Eines oder eine Mischung aus mindestens zwei Organopolysiloxanen (T), die folgende Eigenschaften aufweisen:

- sie sind linear, verzweigt oder zyklisch, bevorzugt linear

- beidseitig endgestoppert, oder einseitig Si-OH endständig oder einseitig alkoxy-silyl endständig, bevorzugt beidseitig endgestoppert

- die ans Si-gebundene Seiten- und Endgruppen $R^1$ sind unabhängig voneinander substituierte oder nicht-substituierte C1 bis C18 Kohlenwasserstoffgruppen, bevorzugt C1-C10 einwertige Kohlenwasserstoffgruppen. Beispiele für $R^1$ umfassen lineare, verzweigte und zyklische Alkyl-, Alkenyl-, Aryl-, Aralkyl- und Halogenalkylgruppen. Geeignete reine Alkylgruppen umfassen die Methyl-, Ethyl-, Propyl-, Hexyl- und Octyl-Gruppen. Geeignete verzweigte Alkylgruppen umfassen Isopropyl-, Isobutyl-, tert-Butyl- und 2-Ethylhexyl-Gruppen. Geeignete cyclische Alkylgruppen umfassen Cyclopentyl- und Cyclohexyl-Gruppen. Geeignete Alkenylgruppen sind Vinyl- und Allyl-Gruppen. Geeignete Arylgruppen umfassen Phenyl- und Tolyl-Gruppen. Geeignete Aralkylgruppen umfassen 2-Phenylethyl- und 2-Methyl-2-phenylethyl-Gruppen. Geeignete Halogenalkylgruppen umfassen 3,3,3-Trifluorpropyl-, 2-(Nonafluorbutyl)ethyl- und 2-(Heptadecafluorooctyl)ethyl-Gruppen. Als $R^1$ sind bevorzugt die Methyl- oder Phenyl-Gruppen.

Das Verfahren zur Herstellung endgestopperter Organopolysiloxane ist dem Fachmann seit langem bekannt und erfolgt bspw. aus Dichlormethylsilan in Gegenwart von Wasser zu linearen, endgestopperten Polymethylpolysiloxanen.

Die dynamische Viskosität dieser Organopolysiloxane (T) liegt zwischen 35 und 1.000.000 mPas, bevorzugt 50 - 100.000 mPas bei 25 °C. Im Stand der Technik sind sie seit langem bekannt und werden häufig als Siliconöle bezeichnet.

Um die Standfestigkeit bzw. Rheologie der nicht-vernetzbaren Siliconzusammensetzung (S) einzustellen, können sog. Rheologieadditive (E) (=Strukturbildner) zugegeben werden. Diese sind dem Fachmann aus dem Stand der Technik bekannt.

Geeignete Rheologieadditve (E) sind feste feinteilige anorganische Füllstoffe. Geeignete Beispiel sind verstärkende und nicht verstärkende Füllstoffe wie Metalloxide oder Furnace-Ruß und Acetylen-Ruß.

Beispiele für geeignete verstärkende Füllstoffe (E), also Füllstoffe mit einer BET-Oberfläche von mindestens 50 $m^2$/g, sind pyrogen hergestellte Kieselsäure, gefällte Kieselsäure oder Silicium-Aluminium-Mischoxide mit einer BET-Oberfläche von mehr als 50 $m^2$/g. Die genannten Füllstoffe können hydrophobiert sein, beispielsweise durch Behandlung mit Organosilanen, -silazanen oder -siloxanen oder durch Veretherung von Hydroxylgruppen zu Alkoxygruppen. Infolge einer Oberflächenbehandlung weisen solche Kieselsäuren einen Kohlenstoffgehalt von mindestens 0,01 bis maximal 20 Gew.-%, bevorzugt zwischen 0.1 und 10 Gew.-%, besonders bevorzugt zwischen 0,5 bis 6 Gew.-% auf.

Beispiele für geeignete nicht verstärkenden Füllstoffe (E), also Füllstoffe mit einer BET-Oberfläche von weniger als 50 m$^2$/g, sind Pulver aus Quarz, Cristobalit, Diatomeenerde, Calciumsilikat, Zirkoniumsilikat, Montmorillonite, wie Bentonite, Zeolithe einschließlich der Molekularsiebe, wie Natriumaluminium¬silikat, Metalloxide, wie Aluminium- oder Zinkoxid bzw. deren Mischoxide, Metallhydroxide, wie Aluminiumhydroxid, Bariumsulfat, Calciumcarbonat, Gips, Siliciumnitrid, Siliciumcarbid, Bornitrid, Glas-, Kohle- und Kunststoffpulver und Glas- und Kunststoffhohlkugeln. Die BET-Oberfläche der nicht verstärkenden Füllstoffe beträgt vorzugsweise weniger als 20 m2/g.

Weiterhin geeignet als Rheologieadditive (E) sind vernetzte Hydrosilylierungsreaktionsprodukte, die erhältlich sind aus der Umsetzung von

- mindestens einem alkenylterminierten Polydiorganosiloxan mit einem Polymerisationsgrad von mindestens 300 und

- mindestens einem Organohydrogensiloxan-Vernetzer, der im Durchschnitt 2 oder mehr SiH-Gruppen pro Molekül aufweist, wobei das Verhältnis des alkenylterminierten Polydiorganosiloxans und des Organohydrogensiloxans so eingestellt wird, dass das molare Verhältnis von SiH-Gruppen zu Alkenylgruppen in einem Bereich von 0,5 bis 2,0 liegen.

Die Vernetzung dieser Art von Rheologieadditiven (E) ist dem Fachmann aus dem Stand der Technik bekannt und kann vor der Zugabe zu den o.g. nicht-vernetzbaren Siliconzusammensetzungen (S) erfolgen oder aber die Vernetzung des Stukturbildners erfogt in situ in den o.g. nicht-vernetzbaren Siliconzusammensetzungen (S).

Weiterhin geeignet als Rheologieadditive (E) sind auch nichtpartikuläre organische oder auf organische Polymere basierende Rheologiadditive. Diese sind kommerziell erhältlich. BASF bietet solche Rheologieadditive bspw. unter den Handelsnamen RHEOVIS®, ATTAGEL®, ATTAFLOW® und EFKA® an. Weitere geeignete Rheologieadditive bietet CRODA unter dem Handelsnamen Atlox Rheostrux™ 100 (ein Polyesterblock-Copolymer) oder Atlox Rheostrux™ 200 (ein Polyamid) an.

Es kann eine Art von Rheologieadditiv (E), es kann aber auch ein Gemisch von mindestens zwei Rheologieadditiven eingesetzt werden.

Sind Rheologieadditive (E) enthalten, so dann vorzugsweise zu 1-9 Gew.-%, bevorzugt 2-8 Gew.-%, bezogen auf die Gesamtmasse an Siliconzusammensetzung (S).

Die erfindungsgemäße nicht-vernetzbare Siliconzusammensetzung (S) kann Alkyl-trialkoxysilane (F) als weitere Zusätze enthalten, um deren Viskosität zu verringern. Sind sie enthalten, so dann vorzugsweise zu 0,1-8 Gew.-%, bevorzugt 0,2-6 Gew.-%, bezogen auf die Gesamtmasse an Siliconzusammensetzung (S), wobei die Alkylgruppe eine gesättigte oder ungesättigte, lineare oder verzweigte Alkylgruppe mit 2 bis 20, bevorzugt 8-18 C-Atomen sein kann, und die Alkoxygruppen können 1 bis 5 Kohlenstoffatome aufweisen. Beispiele für die Alkoxygruppen umfassen Methoxygruppen, Ethoxygruppen, Propoxygruppen und Butoxygruppen, wobei Methoxygruppen und Ethoxygruppen besonders bevorzugt sind. Insbesondere bevorzugt ist für (F) das n-Octyl-trimethoxysilan, n-Dodecyl-trimethoxysilan, n-Hexadecyl-trimethoxysilan und das n-Octadecyl-trimethoxysilan.

Die erfindungsgemäßen nicht-vernetzbaren Siliconzusammensetzungen (S) können wahlweise weitere Bestandteile (G) enthalten. Diese optionale Zusatzstoffe sind harzartige Polyorganosiloxane, Fungizide, Duftstoffe, Korrosionsinhibitoren, Oxidationsinhibitoren, Lichtschutzmittel, flammabweisend machende Mittel und Mittel zur Beeinflussung der elektrischen Eigenschaften, Dispergierhilfsmittel, Lösungsmittel, Pigmente, Farbstoffe, organische Polymere, Hitzestabilisatoren usw. sein.

## Thermisch leitfähiger Füllstoff (Z)

Die erfindungsgemäße nicht-vernetzbare wärmeleitfähige Siliconzusammensetzung (Y) enthält mindestens einen thermisch leitfähigen Füllstoff (Z) mit einer Wärmeleitfähigkeit von mindestens 5 W/mK, mit der Maßgabe, dass die erfindungsgemäßen, nicht-vernetzbaren, wärmeleitfähigen Siliconzusammensetzungen (Y) mindestens 20 Vol-% metallische Siliziumpartikel als thermisch leitfähige Füllstoffe (Z) enthalten, welche noch mindestens die weiteren speziellen Merkmale a) bis c) und in einer bevorzugten Ausführungsform auch d) erfüllen müssen, und die Gesamtmenge thermisch leitfähiger Füllstoffe (Z) mindestens 50 Vol.-% beträgt.

a) Der mittlere Durchmesser x50 dieser erfindungsgemäßen metallischen Siliziumpartikel (Z) liegt im Bereich 30 - 200 μm, vorzugsweise im Bereich 40 - 180 μm, bevorzugt im Bereich 50 - 160 μm.

b) Die erfindungsgemäßen metallischen Siliziumpartikel (Z) sind überwiegend rundlich und werden vorzugsweise über ein Schmelzverfahren hergestellt. Die überwiegend rundliche Form der erfindungsgemäßen Partikel ist dadurch gekennzeichnet, dass das Breite/Länge-Verhältnis (Aspekt-Verhältnis b/l) mindestens 0,76, vorzugsweise mindestens 0,77, bevorzugt mindestens 0,78, insbesondere mindestens 0,79 beträgt.

Vorzugsweise weisen die erfindungsgemäßen Siliziumpartikel (Z) einen Sphärizitätswert SPHT von mindestens 0,75, vorzugsweise mindestens 0,76, bevorzugt mindestens 0,78, insbesondere bevorzugt von mindestens 0,79 auf.

In einer insbesondere bevorzugten Ausführungsform weisen die erfindungsgemäßen Siliziumpartikel (Z) ein Aspekt-Verhältnis von mindestens 0,76 und gleichzeitig einen Sphärizitätswert SPHT von mindestens 0,75, vorzugsweise mindestens 0,76, bevorzugt mindestens 0,78, insbesondere bevorzugt von mindestens 0,79 auf.

c) Die Verteilungsbreite der Partikelgröße (SPAN) ist definiert als SPAN = (x90 - x10) / x50. Der SPAN der erfindungsgemäßen metallischen Siliziumpartikel (Z) ist mindestens 0,28, bevorzugt mindestens 0,30, besonders bevorzugt mindestens 0,35, insbesondere bevorzugt mindestens 0,38. In einer bevorzugten Ausführungsform liegt der SPAN zwischen 0,40 und 2,5, bevorzugt zwischen 0,41 und 2,2, insbesondere zwischen 0,5 und 2,0.

Dabei ist es unerheblich, ob eine einzelne Fraktion von Siliziumpartikel (Z) verwendet wird, deren SPAN im erfindungsgemäßen Bereich liegt, oder ob zwei oder mehrere Fraktionen von Siliziumpartikeln gemischt werden und dadurch die erfinderische Partikelgrößenverteilungsbreite gemäß Merkmal c) der erfinderischen Siliziumpartikel (Z) erreicht wird. Werden zwei oder mehrere Fraktionen von Siliziumpartikeln gemischt, so kann dies vor dem Vermischen mit einer oder mehreren Komponenten der erfindungsgemäßen Zusammensetzung erfolgen, oder die Fraktionen von Siliziumpartikeln können auch getrennt voneinander mit einer oder mehreren Komponenten der erfindungsgemäßen Zusammensetzung gemischt werden. Die Reihenfolge der Zugabe ist dabei egal.

Vorzugsweise werden maximal vier Fraktionen von Siliziumpartikeln gemischt und so die erfindungsgemäße Verteilungsbreite erzielt, bevorzugt werden maximal drei Fraktionen von Siliziumpartikeln gemischt und so die erfindungsgemäße Verteilungsbreite erzielt, besonders bevorzugt werden maximal zwei Fraktionen von erfindungsgemäßen Siliziumpartikeln eingesetzt und so die erfindungsgemäße Verteilungsbreite erzielt, insbesondere bevorzugt wird nur ein einzelnes, erfindungsgemäßes Siliziumpulver eingesetzt.

d) Die erfinderischen Siliziumpartikel (Z) enthalten in einer bevorzugten Ausführungsform höchstens 1,5 Gew.-% Siliziumpartikel kleiner 2 $\mu$m, bevorzugt höchstens 1 Gew.-%, besonders bevorzugt höchstens 0,5 Gew.-%, jeweils bezogen auf die Gesamtmenge an Siliziumpartikel (Z). Insbesondere bevorzugte Siliziumpartikel (Z) sind im Wesentlichen frei von Partikelfraktionen kleiner 2 $\mu$m. Im Wesentlichen frei von bedeutet, dass die Anwesenheit solcher Partikel im Umfang einer "Verunreinigung" der erfindungsgemäßen Partikel (Z) toleriert wird und deren erfindungsgemäße Wirkung nicht stört.

Die erfindungsgemäßen Siliziumpartikel (Z) enthalten verzugsweise weniger als 20 Gew.-%, bevorzugt weniger als 15 Gew.-%, besonders bevorzugt weniger als 10 Gew.-% einer Partikelfraktion mit einem Durchmesser von kleiner oder gleich 20 $\mu$m jeweils bezogen auf die Gesamtmenge an Siliziumpartikel.

Die erfindungsgemäßen Siliziumpartikel (Z) enthalten verzugsweise weniger als 15 Gew.-%, bevorzugt weniger als 10 Gew.-%, besonders bevorzugt weniger als 5 Gew.-% einer Partikelfraktion mit einem Durchmesser von kleiner oder gleich 10 $\mu$m jeweils bezogen auf die Gesamtmenge an Siliziumpartikel.

In einer insbesondere bevorzugten Ausführungsform findet keine beabsichtigte Zugabe von Siliziumpartikel mit einem mittleren Durchmesser von kleiner oder gleich 10 $\mu$m statt. Bevorzugt werden keine Siliziumpartikel kleiner oder gleich 15 $\mu$m zugegeben. Insbesondere bevorzugt findet keine beabsichtigte Zugabe von Siliziumpartikel mit einem mittleren Durchmesser von kleiner oder gleich 20 $\mu$m statt.

Nachteilig an sehr feinen Siliziumpartikeln oder gemahlenen Siliziumpartikeln ist außerdem, dass solche Partikel eine vergleichsweise große Oberfläche haben und sehr viel Polymer binden. Dadurch erhöht sich die Viskosität der Siliconzusammensetzung sehr stark, so dass nur Mischungen mit vergleichsweise niedrigen Füllgraden und damit niedriger Wärmeleitfähigkeit erzeugt werden können. Bei höheren Füllgraden wird die Zusammensetzung sehr steif und kann mit klassischen Verfahren, wie z.B. Dispenser, nicht mehr verarbeitet werden. Auch zeigt sich, dass Siliconzusammensetzungen enthaltend gemahlene Siliziumpartikel vergleichsweise stark brennbar sind.

Metallisches Silizium weist mehrere sehr vorteilhafte Eigenschaften für die Verwendung als thermoleitfähiger Füllstoff (Z) auf. Beispielsweise verbessert die außergewöhnlich hohe Wärmeleitfähigkeit von Siliziumpartikeln (Z) die Wärmeleitfähigkeit der daraus hergestellten thermoleitfähigen Siliconzusammensetzung (Y). Die niedrige Dichte der Siliziumpartikel (Z) reduziert das Gewicht der Zusammensetzung und der daraus hergestellten Bauteile und hilft Kosten zu sparen. Die niedrige elektrische Leitfähigkeit ermöglicht die Herstellung elektrisch isolierender Bauteile und verbessert die elektrische Durchschlagsfestigkeit. Die niedrige Mohshärte der Siliziumpartikel (Z) reduziert die Abrasion bei der Verarbeitung. Dem Fachmann ist verständlich, dass die genannten Vorteile mit abnehmender Reinheit des Siliziums ganz oder teilweise verloren gehen. Die Reinheit der erfindungsgemäßen Siliziumpartikel (Z) und damit der Gehalt an Silizium beträgt mindestens 80%, bevorzugt mindestens 90%, besonders bevorzugt mindestens 95%.

Dem Fachmann ist ferner bekannt, dass metallische Siliziumpartikel unter bestimmten Bedingungen brennbar und die Stäube explosionsgefährlich sind. Der Fachmann weiß auch, dass die Gefahr der Staubbildung, die Brennbarkeit und Explosionsgefährlichkeit von Metallpulvern mit abnehmender Partikelgröße stark zunimmt. Aus diesem Grund sind sehr kleine Siliziumpartikel unter 30 $\mu$m für viele Anwendungen nicht geeignet. Solche Partikel sind aufgrund der niedrigen Mindestzündenergie gefährlich in der Handhabung und erfordern aufwändige und kostenintensive Sicherheitsvorkehrungen in der betrieblichen Verarbeitung. Ferner zeigte sich, dass Zusammensetzungen, die sehr kleine Siliziumpartikel unter 30 $\mu$m enthalten, vergleichsweise stark brennbar sind.

Größere Siliziumpartikel mit einer mittleren Partikelgröße über 30 $\mu$m weisen eine vergleichsweise hohe Mindestzündenergie auf und sind daher in betrieblichen Prozessen einfacher und sicherer verarbeitbar. Dennoch erwiesen sich Zusammensetzungen, die nicht-erfindungsgemäße gemahlene, kantige Siliziumpartikel größer 30 $\mu$m enthalten, als vergleichsweise stark brennbar.

Siliziumpartikel mit einer mittleren Partikelgröße von über 200 $\mu$m sind für viele Anwendungen von wärmeleitfähigen Siliconzusammensetzungen nicht geeignet, da solch großkörnige Siliziumpartikel häufig nicht in die feinen Spalte passen, die beispielsweise mit Gap Filler auszufüllen sind. Ferner zeigt sich, dass auch solch großkörnige Siliziumpartikel eine vergleichsweise hohe Brennbarkeit zeigen.

Die Verwendung von sphärischen Füllstoffen zur Verbesserung der Fließfähigkeit und Verarbeitbarkeit von gefüllten Polymeren ist im Stand der Technik hinreichend bekannt. Der Stand der Technik kennt jedoch nur wenige Schriften, in denen sphärische Siliziumpartikel in thermoleitfähigen Siliconzusammensetzungen verwendet werden. Die offenbarten Zusammensetzungen enthalten ausschließlich sehr kleine sphärische Siliziumpartikel mit einer mittleren Partikelgröße von weniger als 25 $\mu$m, deren Nachteile beschrieben sind.

Vollkommen überraschend hat sich gezeigt, dass die erfindungsgemäßen, nicht-vernetzbaren, wäremleitfähigen Siliconzusammensetzungen (Y) thermisch leitfähig und gleichzeitig schwerbrennbar sind, wenn sie erfindungsgemäße metallische Siliziumpartikel, welche gleichzeitig die Merkmale a) bis c) erfüllen, in den geforderten Mindestmengen enthalten.

Die erfindungsgemäße nicht-vernetzbare Siliconzusammensetzung (Y) enthält mindestens 20 Vol-% solcher metallischer Siliziumpartikel (Z), vorzugsweise mindestens 25 Vol-%, bevorzugt mindestens 30 Vol-%, insbesondere bevorzugt mindestens 35 Vol-%. Enthält die Siliconzusammensetzung (Y) geringere Mengen metallischer Siliziumpartikel (Z), so sind die gewünschten vorteilhaften Effekte des metallischen Siliziums, beispielsweise der niedrigen Dichte und der hohen thermischen Leitfähigkeit, nicht mehr ausreichend gegeben.

Der Stand der Technik kennt verschiedene Methoden zur Erzeugung feinteiliger Metallpartikel mit rundlicher Form. Die erfindungsgemäßen Siliziumpartikel (Z) werden vorzugsweise aus einem geschmolzenen Zustand erzeugt, wodurch sie eine vergleichsweise glatte Oberfläche aufweisen und im Wesentlichen frei von Bruchstellen, scharfen Kanten und spitzen Ecken sind. Dadurch unterscheiden sie sich von herkömmlichen gemahlenen Partikeln, die beispielsweise mittels Brechen, Schleifen oder Mahlen in die finale Form gebracht wurden. Dabei ist es unerheblich, ob die Partikel in einem ersten Verfahrensschritt kalt zerkleinert werden, beispielsweise durch Mahlung, und anschließend durch Erhitzen über den Schmelzpunkt in eine schmelzflüssige Form gebracht werden, beispielsweise durch Hitzebehandlung in einer heißen Zone, beispielsweise mittels eines Plasmas, oder ob zunächst eine Siliziumschmelze erzeugt und anschließend zerkleinert wird, beispielsweise durch Zerstäuben. Vorzugsweise werden die erfindungsgemäßen Siliziumpartikel durch Sprühen oder Zerstäuben, auch Atomisieren genannt, einer Siliziumschmelze und anschließendes Abkühlen in die erfindungsgemäße feste Form gebracht.

Geeignete Verfahren zur Erzeugung der erfindungsgemäßen Siliziumpartikel (Z) sind dem Fachmann bekannt und werden beispielsweise beschrieben in Kapitel 2.2 in "Pulvermetallurgie: Technologien und Werkstoffe, Schatt, Werner, Wieters, Klaus-Peter, Kieback, Bernd, S. 5-48, ISBN 978-3-540-681112-0, E-Book: https://doi.org/10.1007/ 978-3-540-68112-0_2". Bevorzugte Verfahren zur Erzeugung der erfindungsgemäßen Siliziumpartikel (Z) sind die Inertgasverdüsung, auch Gasatomisierung genannt, Druckwasserverdüsung, auch Flüssigatomisierung oder Wasserzerstäubungsverfahren genannt, oder Schmelzschleuderverfahren, auch Zentrifugalatomisierung oder Rotationszerstäubung genannt. Die beschriebenen Verfahren erlauben die Herstellung von metallischen Siliziumpartikeln in einem sehr unterschiedlichen Partikelgrößenbereich, insbesondere im Bereich der mittleren Partikelgröße von wenige Micrometer bis zu wenige Millimeter. Außerdem können die metallischen Siliziumpartikel in sehr unterschiedlicher Kornform, beispielsweise "spratzig", das heißt sehr unregelmäßig, ellipsoid oder sphärisch, und mit sehr variabler Breite der Partikelgrößenverteilung erzeugt werden. Vollkommen überraschend hat sich gezeigt, dass ausschließlich solche Siliziumpartikel erfindungsgemäße vorteilhafte Eigenschaften zeigen, insbesondere eine vergleichsweise niedrige Brennbarkeit, welche überwiegend rundlich sind und gleichzeitig die erfindungsgemäßen Merkmale a) bis c)erfüllen.

Vorzugsweise ist das Herstellverfahren der erfindungsgemäßen metallischen Siliziumpartikel (Z) so auszuführen, dass die Partikel in ihrer erfindungsgemäßen überwiegend rundlichen Form anfallen und somit die Merkmale a) - c) erfüllen und im Wesentlichen frei sind von spratzigen, nodularen, kantigen oder spitzen Partikeln. Die erstarrten Partikel können in einem anschließenden Verfahrensschritt gemäß gängiger Verfahren nach Größe getrennt werden, z.B. mittels Klassieren durch Sieben oder mittels Sichten. Bei diesen Verfahren können Agglomerate und verklebte Partikel getrennt werden, es werden jedoch im Wesentlichen keine Partikel zerstört. Überwiegend rundlich bzw. im Wesentlichen frei von bedeutet, dass die Anwesenheit solcher Partikel im Umfang einer "Verunreinigung" der erfindungsgemäßen Partikel (Z) toleriert wird und deren erfindungsgemäße Wirkung nicht stört.

Die erfindungsgemäße nicht-vernetzbare Siliconzusammensetzung (Y) kann neben diesen metallischen Siliziumpartikeln (Z) weitere wärmeleitfähige Füllstoffe (Z) mit Wärmeleitfähigkeit größer 5 W/mK enthalten. Beispiele für solche weitere wärmeleitfähige Füllstoffe (Z) sind Magnesiumoxid, metallisches Aluminiumpulver, metallisches Silberpulver, Zinkoxid, Bornitrid, Siliziumcarbid, Aluminiumnitrid, Aluminiumhydroxid, Aluminiumoxid, Graphit, usw. Bevorzugte weitere Füllstoffe sind Aluminiumpulver, Magnesiumoxid, Aluminiumhydroxid, Zinkoxid und Aluminiumoxid. Besonders bevorzugte Füllstoffe sind Aluminiumhydroxid und Aluminiumoxid, wobei Aluminiumhydroxid insbesondere bevorzugt ist. Die Form des weiteren Füllstoffs ist grundsätzlich nicht eingeschränkt. Die Partikel können beispielsweise sphärisch, ellipsoid, nadelförmig, röhrenförmig, plättchenförmig, faserförmig oder unregelmäßig geformt sein. Bevorzugt sind sie sphärisch, ellipsoid oder unregelmäßig geformt. Der mittlere Durchmesser der weiteren wärmeleitfähigen Füllstoffe (Z) liegt vorzugsweise im Bereich 0,01 - 200 $\mu$m, bevorzugt im Bereich 0,1 - 150 $\mu$m, besonders bevorzugt im Bereich 0,2 - 120 $\mu$m, insbesondere im Bereich 0,4 - 80 $\mu$m

Füllstoffe mit sehr hoher Dichte sind nachteilig in der Anwendung, wie zum Beispiel in Flugzeugen und Elektrofahrzeugen, da sie das Gewicht der Bauteile sehr stark erhöhen. Vorzugsweise haben die weiteren wärmeleitfähigen Füllstoffe (Z) eine Dichte von höchstens 6,0 g/cm$^3$, bevorzugt höchstens 4,5 g/cm$^3$, besonders bevorzugt höchstens 3,0 g/cm$^3$.

Vorzugsweise enthält die erfindungsgemäße nicht-vernetzbare Siliconzusammensetzung (Y) höchstens 24 Gew.-%, bevorzugt höchstens 20 Gew.-%, besonders bevorzugt höchstens 16 Gew.-%, insbesondere bevorzugt höchstens 12 Gew.-% eines weiteren wärmeleitfähigen Füllstoffs (Z) mit einer Dichte von größer 5,0 g/cm$^3$. In einer insbesondere bevorzugten Ausführungsform ist die erfindungsgemäße nicht-vernetzbare Siliconzusammensetzung (Y) frei von weiteren wärmeleitfähigen Füllstoffen (Z) mit einer Dichte von größer 5,0 g/cm$^3$.

Vorzugsweise enthält die erfindungsgemäße nicht-vernetzbare Siliconzusammensetzung (Y) höchstens 60 Gew.-%, bevorzugt höchstens 45 Gew.-%, besonders bevorzugt höchstens 30 Gew.-%, insbesondere bevorzugt höchstens 20 Gew.-% eines weiteren wärmeleitfähigen Füllstoffs (Z) mit einer Dichte von größer 3,0 g/cm$^3$.

In vielen Anwendungen ist eine elektrische Leitfähigkeit der wärmeleitfähigen Zusammensetzung nicht gewünscht, da diese beispielsweise zu Kurzschlüssen führen kann. Vorzugsweise enthält die erfindungsgemäße Zusammensetzung (Y) ausschließlich wärmeleitfähige Füllstoffe (Z) deren spezifischer Widerstand mindestens 1 $\Omega$•mm$^2$/m beträgt.

Bevorzugte erfindungsgemäße, nicht-vernetzbare, wäremleitfähige Siliconzusammensetzungen (Y) enthalten als thermoleitfähigen Füllstoff (Z) die erfindungsgemäßen metallischen Siliziumpartikel als alleinigen thermoleitfähigen Füllstoff (Z) oder in Kombination mit bis zu drei weiteren thermoleitfähigen Füllstoffen (Z). Verunreinigungen von bis zu 5% gelten dabei nicht als weiterer Füllstoff (Z).

Enthalten die bevorzugten erfindungsgemäßen Zusammensetzungen die erfindungsgemäßen metallischen Siliziumpartikel (Z) als einzigen thermisch leitfähigen Füllstoff (Z) mit einer Wärmeleitfähigkeit größer 5 W/mK, wird vorzugsweise ein Rheologiemodifier oder Verdickungsmittel zugesetzt, welches das Absetzen des Füllstoffes verhindert. Geeignete Rheologiemodifier sind dem Fachmann bekannt, wobei hydrophobe Kieselsäure bevorzugt ist.

Die Gesamtmenge thermisch leitfähiger Füllstoffe (Z) in der erfindungsgemäßen nicht-vernetzbaren wärmeleitfähigen Siliconzusammensetzung (Y) ist 50-95 Vol.-%, vorzugsweise 60-90 Vol.-%, bevorzugt 65-88 Vol.-%. Enthält die Siliconzusammensetzung (Y) geringere Mengen an wärmeleitfähigen Füllstoff (Z), so ist keine ausreichende Wärmeleitfähigkeit gegeben, enthält die Siliconzusammensetzung (Y) größere Mengen an wärmeleitfähigen Füllstoff (Z), dann wird die Zusammensetzung (Y) schlecht verarbeitbar, da sie hochviskos oder sogar bröselig wird.

Die erfindungsgemäßen, nicht-vernetzbaren, wärmeleitfähigen Siliconzusammensetzungen (Y) weisen eine Wärmeleitfähigkeit von mindestens 0,6 W/mK, vorzugsweise mindestens 0,8 W/mK, bevorzugt mindestens 1,2 W/mK, insbesondere mindestens 1,5 W/mK auf.

Die Viskosität der erfindungsgemäßen, nicht-vernetzbaren, thermoleitfähigen Siliconzusammensetzungen (Y) kann in einem sehr breiten Bereich variieren und an die Erfordernisse der Anwendung angepasst werden. Die Einstellung der Viskosität der unvernetzten erfindungsgemäßen, nicht-vernetzbaren, thermoleitfähigen Siliconzusammensetzungen (Y) erfolgt vorzugsweise über den Gehalt an thermoleitfähigem Füllstoff (Z) und/oder die Zusammensetzung der Siliconzusammensetzung (S), gemäß den üblichen Methoden aus dem Stand der Technik. Diese sind dem Fachmann bekannt. Bevorzugt erfolgt die Einstellung der Viskosität über die Auswahl und Kombination der Komponenten (T) und (Z) und der optionalen Zugabe von (E) und/oder (F).

Die dynamische Viskosität der thermoleitfähigen erfindungsgemäßen, nicht-vernetzbaren Siliconzusammensetzungen (Y) ist bevorzugt im Bereich 100 - 1 000 000 mPa•s, vorzugsweise im Bereich 1 000 - 750 000 mPa•s, besonders bevorzugt im Bereich 2 000 - 500 000 mPa•s, insbesondere höchstens 250 000 mPa•s, jeweils bei Scherrate D = 10 s$^{-1}$ und 25 °C.

Die Dichte der erfindungsgemäßen, thermoleitfähigen, nicht-vernetzbaren Siliconzusammensetzungen (Y) ist kleiner 4,5 **g/cm$^3$**, vorzugsweise kleiner 4,0 **g/cm$^3$**, bevorzugt kleiner 3,5 **g/cm$^3$**, insbesondere kleiner 3,3 **g/cm$^3$**.

**Ein weiterer Gegenstand der vorliegenden Erfindung ist** ein Verfahren zur Herstellung der erfindungsgemäßen, nicht-vernetzbaren, thermoleitfähigen Siliconzusammensetzungen (Y) durch Vermischen der einzelnen Komponenten.

Die Komponenten können nach den üblichen kontinuierlichen und diskontinuierlichen Verfahren des Standes der Technik gemischt werden. Als Mischvorrichtung sind alle bekannten Vorrichtungen geeignet. Beispiele hierfür sind uniaxiale oder biaxiale kontinuierliche Mischer, Doppelwalzen, Ross-Mischer, Hobart-Mischer, Dental-Mischer, Planetenmischer, Kneter und Henschel-Mischer oder ähnliche Mischer. Vorzugsweise wird in einem Planetenmischer, einem Kneter oder einem kontinuierlichen Mischer gemischt. Die nicht-vernetzbare Siliconzusammensetzung (Y) kann beim Mischen optional erwärmt werden, vorzugsweise wird in einem Temperaturbereich von 15 - 140 °C gemischt, bevorzugt in einem Bereich von 15 - 60 °C. Auch die Vorgehensweise zur Herstellung der bevorzugten nicht-vernetzbaren Siliconzusammensetzungen (Y) ist dem Fachmann bekannt. Grundsätzlich können die Komponenten in beliebiger Reihenfolge zugegeben werden. Beispielsweise können die Komponenten e) und optional g) vorgemischt werden und anschließend mit den Komponenten a) und/oder b) gemischt werden. Dabei kann die Mischung optional auch erwärmt werden. Vorzugsweise wird mindestens eine Teilmenge von a) und das Alkoxysilan g) gemischt, anschließend der/die wärmeleitfähige(n) Füllstoff(e) (Z) eingemischt. Vorzugsweise findet die Herstellung ohne aktives Heizen statt.

Die erfindungsgemäße nicht-vernetzbare Siliconzusammensetzung (Y) hat sehr gute Verarbeitungseigenschaften bezüglich Fluidität, Spaltfülleigenschaften und Schichtstärkenkontrolle und kann präzise aufgetragen werden.

**Ein weiterer Gegenstand der vorliegenden Erfindung ist** die Verwendung der **nicht-vernetzbaren, wärmeleitfähigen Siliconzusammensetzung (Y)** als Thermoleitpaste zur Ableitung von Wärme von Wärmerzeugern in elektronischen Apparaturen. Die nicht-vernetzbaren, wärmeleitfähigen Siliconzusammensetzung (Y) wird auf Wärmeerzeuger oder Wärmeableiter aufgetragen oder sie werden damit beschichtet. Wärmeerzeuger findet man in elektronischen Apparaturen der Stromversorgungen und in elektronischen Geräten, wie bspw. Versorgungstransistoren, Leistungsmodule, Transistoren, Thermokoppler und Temperatursensoren; wärmeerzeugende elektronische Teile, bspw. integrierte Schaltkreisteile wie CPUs und Batterien. Geeignete Wärmeableiter umfassen wärmeableitende Bauteile wie Wärmeverteiler und Kühlkörper und Kühllamellen. Wenn die nicht-vernetzbare, wärmeleitfähige Siliconzusammensetzung (Y) zwischen einem Wärmeerzeuger und einem Wärmeableiter eingebracht wird, kann die Wärme effizient vom Wärmeerzeuger zum Wärmeableiter geleitet werden. Damit wird eine effektive Kühlwirkung des Wärmeerzeugers erreicht.

**Messmethoden**

**Messung der Wärmeleitfähigkeit Lambda**

Die Wärmeleitfähigkeit wird nach ASTM D5470-12 an einem TIM Tester (Steinbeis Transferzentrum Wärmemanagement in der Elektronik, Lindenstr. 13/1, 72141 Walddorfhäslach, Deutschland) bestimmt. Dabei wird der thermische Widerstand der Probe, die sich zwischen 2 Prüfzylindern befindet, durch einen konstanten Wärmefluss bestimmt. Über die Schichtdicke der Probe wird die effektive Wärmeleitfähigkeit berechnet.

Für die Messung wird die Probe mit Hilfe einer Schablone aufgetragen und die Messzylinder manuell auf eine Dicke von 1,9 - 2,0 mm zusammengefahren, danach überstehendes Material entfernt. Die Messung der Wärmeleitfähigkeit erfolgt bei konstantem Spalt von 1,8 - 1,6 - 1,4 - 1,2 - 1,0 mm. Auswertung erfolgt über eine integrierte Reporterstellung. Nach einer Plausibilitätsprüfung (Bestimmtheitsmaß der Gerade > 0,998) wird die thermische Leitfähigkeit Lambda als effektive Wärmeleitfähigkeit in W/(m*K) ausgegeben.

**Messung der dynamischen Viskosität**

Die dynamische Viskosität wurde an einem Rheometer "MCR 302" der Fa. Anton Paar nach DIN EN ISO 3219: 1994 und DIN 53019 mittels einer Fließkurve mit folgenden Parametern gemessen: Messart: T/D; Temperatur: 25,0 °C; Messelement: PP25; Messspalt: 0,50 mm; Scherrate: 0,1 - 10 s$^{-1}$; Zeit: 120 sec; Messwerte: 30. Die Viskositätsangabe in Pa•s erfolgt als Interpolationswert bei einer Schergeschwindigkeit von D = 10 s$^{-1}$.

**Messung der Dichte**

Die Dichte der unvernetzten, wärmeleitfähigen Siliconzusammensetzungen wurde gemäß ISO 1183, die Dichte der vernetzten, wärmeleitfähigen Siliconzusammensetzungen gemäß ISO 1184 ermittelt.

**Partikelgrößen- und Partikelformanalyse**

Die Analyse der Partikelgröße (mittlerer Durchmesser x50), der Partikelgrößenverteilung (Parameter: Standardabweichung Sigma und Verteilungsbreite SPAN) und der Partikelform (Parameter: Aspekt-Verhältnis b/l und Sphärizität SPHT) erfolgte mit einem Camsizer X2 von Retsch Technology (Messprinzip: Dynamische Bildanalyse) gemäß ISO 13322-2 und ISO 9276-6 (Art der Analyse: Trockenmessung von Pulvern und Granulaten; Messbereich: 0,8 $\mu$m - 30 mm; Druckluftdispergierung mit "X-Jet"; Dispergierdruck = 0,3 bar). Die Auswertungen erfolgten volumenbasiert nach dem Modell $x_{c\,min}$.

Die nachfolgenden Beispiele beschreiben die prinzipielle Ausführbarkeit der vorliegenden Erfindung, ohne jedoch diese auf die darin offenbarten Inhalte zu beschränken.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

**Beispiele**

**Übersicht der verwendeten erfindungsgemäßen und nicht-erfindungsgemäßen Siliziumpulver und Siliziumpulver-Mischungen**

In Tabelle 1 sind die Eigenschaften der in den Beispielen verwendeten erfindungsgemäßen und nicht-erfindungsgemäßen Siliziumpulver zusammengefasst.

Die erfindungsgemäßen Beispiele 1-3 verwenden erfindungsgemäße Siliziumpulver, welche mittels Inertgasatomisierung gewonnen wurden, und damit überwiegend rundlich sind, und zudem eine vergleichsweise breite, erfindungsgemäße Partikelgrößenverteilung aufweisen.

Die nicht-erfindungsgemäßen Vergleichsbeispiele V1-V2 verwenden nicht-erfindungsgemäße Siliziumpulver, welche mittels Inertgasatomisierung gewonnen wurden, und damit überwiegend rundlich sind, jedoch eine vergleichsweise schmale, nicht-erfindungsgemäße Partikelgrößenverteilung aufweisen und das erfindungsgemäße Merkmal c) nicht erfüllen.

Die nicht-erfindungsgemäßen Vergleichsbeispiele V3-V5 verwenden nicht-erfindungsgemäße Siliziumpulver, welche eine vergleichsweise breite Partikelgrößenverteilung aufweisen, jedoch mittels Mahlverfahren gewonnen wurden, und damit im Wesentlichen eckig und kantig sind und das erfindungsgemäße Merkmal b) nicht erfüllen. Das Vergleichsbeispiel V5 weist einen Gehalt an Siliciumpartikeln kleiner 2 $\mu$m von 3,8 Gew.-% auf und erfüllt damit zusätzlich nicht das Merkmal d).

**Beispiel 4: Herstellung der Siliziumpulver-Mischung 4 (erfindungsgemäß)**

100 g eines nicht-erfindungsgemäßen Siliziumpulvers, welches einen x50 von 68,6 $\mu$m, einen SPAN von 0,20, einen b/l von 0,85 und SPHT von 0,84 aufweist, 200 g des nicht-erfindungsgemäßen Siliziumpulvers aus Vergleichsbeispiel V2, 400 g eines nicht-erfindungsgemäßen Siliziumpulvers, welches einen x50 von 105,4 $\mu$m, einen SPAN von 0,24, einen b/l von 0,83 und SPHT von 0,92 aufweist, 200 g eines nicht-erfindungsgemäßen Siliziumpulvers, welches einen x50 von 133,8 $\mu$m, einen SPAN von 0,25, einen b/l von 0,82 und SPHT von 0,94 aufweist, und 100 g eines nicht-erfindungsgemäßen Siliziumpulvers, welches einen x50 von 162,1 $\mu$m, einen SPAN von 0,22, einen b/l von 0,82 und SPHT von 0,94 aufweist, werden mit einem handelsüblichen Laborrührwerk TYP RW 28 (IKA®-Werke GmbH & CO. KG, 79219 Staufen, Deutschland) homogen vermischt. Man erhält eine erfindungsgemäße Siliziumpulver-Mischung, welches einen x50 von 107,8 $\mu$m, einen SPAN von 0,75, einen b/l von 0,83 und SPHT von 0,91 aufweist, und die erfindungsgemäßen Merkmale a) bis c) und sogar d) erfüllt.

**Abkürzungen**

Bsp.    Beispiel

V    Vergleichsbeispiel

PF    Partikelform

r    überwiegend rundlich

e    eckig

n    nodular

E    erfindungsgemäß

NE    nicht erfindungsgemäß

n.b.    nicht bestimmt

Tabelle 1: Übersicht der verwendeten Siliziumpulver

| Bsp. | x10 (mm) | x50 (mm) | x90 (mm) | SPAN | SPHT | PF | b/l | Bemerkung |
|---|---|---|---|---|---|---|---|---|
|  |  | Merkmal a) |  | Merkmal c) |  | Merkmal b) |  |  |
| 1* | 23,4 | 58, 9 | 123,3 | 1,69 | 0,82 | r | 0,85 | E |
| 2* | 55,7 | 82, 9 | 125,8 | 0,85 | 0,86 | r | 0,83 | E |
| 3* | 126,3 | 155,1 | 180, 1 | 0, 41 | 0, 94 | r | 0,82 | E |
| 4* | 72,5 | 107,8 | 152, 9 | 0, 75 | 0,91 | r | 0,83 | E |
| V1 | 48, 9 | 52,1 | 58,5 | 0,18 | 0,82 | r | 0,85 | NE |
| V2 | 72,6 | 82, 1 | 92,2 | 0,24 | 0,89 | r | 0, 83 | NE |
| V3 | 10,8 | 36, 9 | 84, 9 | 2,01 | 0,76 | e | 0, 67 | NE |
| V4 | 20,1 | 95,3 | 187,5 | 1,76 | 0,78 | e | 0, 63 | NE |
| V5** | 3, 1 | 5,9 | 8, 8 | 0, 97 | 0,86 | e | 0,75 | NE |

\* Der Gehalt an Siliziumpartikel <2 $\mu$m betrug im Rahmen der Messgenauigkeit 0,0 Gew.-%.
\*\* Der Gehalt an Siliziumpartikel <2 $\mu$m betrug 3,8 Gew.-%.

**Allgemeine Vorschrift 1 (AV1) zur Herstellung der nicht-vernetzbaren, thermoleitfähigen Siliziumpulver-haltigen Siliconzusammensetzung (erfindungsgemäße Beispiele 5 bis 8 und nicht-erfindungsgemäße Beispiele V6 bis V12)**

Schritt 1: Herstellung einer nicht-vernetzbaren, thermoleitfähigen Siliziumpulver-haltigen Siliconzusammensetzung 40,8 g eines Trimethylsiloxy-terminierten Polydimethylsiloxans, das eine Viskosität von 1000 mPa•s aufweist und 5,18 g eines Trimethylsiloxy-terminierten Polydimethylsiloxans, das eine Viskosität von 200 mPa•s und einen Gehalt an Si-gebundenem Wasserstoff von 0,18 Gew.-% aufweist, wurden mittels eines SpeedMixer DAC 400 FVZ (Hauschild & Co KG, Waterkamp 1, 59075 Hamm, Deutschland) bei einer Drehzahl von 2350 U/min für 25 Sekunden homogenisiert. Danach wurde jeweils ein Siliziumpulver im Mengenverhältnis gemäß Tabelle 2 oder gemäß Tabelle 3 zugegeben und 25 Sekunden bei 2350 U/min mittels SpeedMixer gemischt. Die Siliziumpartikel-haltige Siliconzusammensetzung wurde mit einem Spatel durchgerührt und dabei Siliziumpulverreste vom Gefäßrand eingemischt. Anschließend wurde weitere 25 Sekunden bei 2350 U/min mittels SpeedMixer homogenisiert und auf Raumtemperatur abgekühlt.
Man erhält eine pastöse Masse.

**Beispiel 9 Brennbarkeitsprüfung**

Die Brennbarkeitsprüfung der erfindungsgemäßen nicht-vernetzbaren Siliconzusammensetzung gemäß Beispiel 5 und der nicht-erfindungsgemäßen Siliconzusammensetzungen gemäß der Vergleichsbeispiele V6 bis V8 erfolgt in einer vereinfachten Prüfung angelehnt an UL 94 HB.
Die erfindungsgemäße nicht-vernetzbaren Siliconzusammensetzungen gemäß Beispiel 5 und die nicht-erfindungsgemäßen Siliconzusammensetzungen gemäß der Vergleichsbeispiele V6 bis V8 werden in einer 2 mm dicken Schicht auf eine 150 mm lange, 10 mm breite und 2 mm dicke Aluminiumplatte aufgebracht. Die Platte wird an der rechten, langen Seite in senkrechter Position befestigt, sodass der Aluminiumträger nach hinten und die aufgerakelte Probe nach vorne zeigen. Der Brenner wird so eingestellt, dass eine blaue Flamme von einer Länge von 325 mm entsteht. Die Flamme wird in waagrechter Position, senkrecht zum Teststück, auf die vordere Seite des Probenkörpers gerichtet, sodass die Spitze der blauen Flamme 20 mm vom linken Ende des Teststücks auf die vordere Seite des Teststücks zeigt. Nach 30 Sekunden Einwirken wird die Flamme entfernt.

Prüfung und Bewertung der Brennbarkeit: Während des Beflammens wird das Flammbild und mögliches Abtropfen von brennenden Probenmaterial beobachtet. Die Nachbrennzeit (Gesamtzeit aus Nachbrennen und Nachglühen) des Versuchsstückes wird notiert. Die Probe sollte während des Beflammens ein schwaches Flammbild zeigen und nicht brennend abtropfen. Nach dem Entfernen der Flamme sollte die Probe unmittelbar erlöschen und weniger als 1 Sekunde nachbrennen bzw. glühen. Der Test wird an 3 verschiedenen Versuchsstücken durchgeführt und der Durchschnittswert der Nachbrennzeit wird ermittelt. Die Ergebnisse sind der Tabelle 2 zu entnehmen.

Beim nicht-erfindungsgemäßen Vergleichsversuch V7, enthaltend 62,5 Vol.-% der nicht-erfindungsgemäßen Siliziumpartikel gemäß dem Vergleichsbeispiel V5, welche insbesondere das Merkmal b) nicht erfüllen, entstand eine sehr hochviskose Siliconzusammensetzung, welche nicht in einer gleichmäßigen Schicht aufgebracht und geprüft werden konnte.

Tabelle 2: Zusammensetzung und Brennbarkeit Siliziumpulver-haltiger Siliconzusammensetzungen

| Bsp. | Siliziumpulver gemäß Tabelle 1 | | | Nicht-vernetzbare Siliconzusammensetzung | |
|---|---|---|---|---|---|
| | Bsp. | Menge (g) | Gehalt (Vol.-%) | Dichte (g/cm$^3$) | Wärmeleitfähigkeit (W/mK) |
| 5 | 1 | 184,0 | 62,5 | 1,82 | 1,9 |
| V6 | V1 | 184,0 | 62,5 | 1,82 | 1,8 |
| V7 | V5 | 184,0 | 62,5 | 1,82 | 1,8 |
| V8 | V5 | 144,8 | 49,2 | 1,64 | 1,2 |

| Bsp. | Siliziumpulver gemäß Tabelle 1 | | |
|---|---|---|---|
| | Flammbild | Nachbrennzeit (s) | Brennendes Abtropfen |
| 5 | schwach | <1 | nein |
| V6 | intensiv | <1 | ja |
| V7 | n.b. | n.b. | n.b. |
| V8 | Intensiv | 8 | nein |

Bei der Brennbarkeitsprüfung zeigte sich, dass die Vergleichsbeispiele V6 und V8, enthaltend ein nicht-erfindungsgemäßes Siliziumpulver gemäß der Vergleichsbeispiele V1 oder V5, welches eines oder mehrere der Merkmale a) bis d) nicht erfüllt, eine vergleichsweise ungünstiges Brandverhalten zeigen.

Vollkommen unerwartet zeigte sich, dass das erfindungsgemäße Siliziumpulver aus dem Beispiel 1, welches gleichzeitig die Merkmale a) bis c) und sogar d) erfüllt, den erfindungsgemäßen Vorteil einer reduzierten Brennbarkeit zeigt.

**Beispiel 10 Brennbarkeitsprüfung**

Die Brennbarkeitsprüfung der erfindungsgemäßen nicht-vernetzbaren Siliconzusammensetzungen gemäß der Beispiele 6 bis 8 und der nicht-erfindungsgemäßen Siliconzusammensetzungen gemäß der Vergleichsbeispiele V9 bis V12 erfolgt in einer vereinfachten Prüfung angelehnt an UL 94 HB. Im Unterschied zu Beispiel 9 wurden die Platten in waagrechter Position befestigt, sodass der Aluminiumträger nach unten und die aufgerakelte Probe nach oben zeigen.

Beim nicht-erfindungsgemäßen Vergleichsversuch V10, enthaltend 62,5 Vol.-% der nicht-erfindungsgemäßen Siliziumpartikel gemäß dem Vergleichsbeispiel V3, welche insbesondere das Merkmal b) nicht erfüllen, entstand eine sehr hochviskose Siliconzusammensetzung, welche nicht in einer gleichmäßigen Schicht aufgebracht und geprüft werden konnte.

Prüfung und Bewertung der Brennbarkeit: Während des Beflammens wird das Flammbild und mögliches Abtropfen von brennenden Probenmaterial beobachtet. Die Nachbrennzeit (Gesamtzeit aus Nachbrennen und Nachglühen) des Versuchsstückes wird notiert. Die Probe sollte während des Beflammens ein schwaches Flammbild zeigen und nicht brennend abtropfen. Nach dem Entfernen der Flamme sollte die Probe unmittelbar erlöschen und weniger als 1 Sekunde nachbrennen bzw. glühen. Der Test wird an 3 verschiedenen Versuchsstücken durchgeführt und der Durchschnittswert der Nachbrennzeit wird ermittelt. Die Ergebnisse sind der Tabelle 3 zu entnehmen.

Tabelle 3: Zusammensetzung und Brennbarkeit Siliziumpulver-haltiger Siliconzusammensetzungen

| Bsp. | Siliziumpulver gemäß Tabelle 1 | | | Nicht-vernetzbare Siliconzusammensetzung | |
|---|---|---|---|---|---|
| | Bsp. | Menge (g) | Gehalt (Vol.-%) | Dichte ($g/cm^3$) | Wärmeleitfähigkeit (W/mK) |
| 6 | 2 | 184,0 | 62,5 | 1,82 | 1,9 |
| 7 | 3 | 184,0 | 62,5 | 1,82 | 1,8 |
| 8 | 4 | 184,0 | 62,5 | 1,82 | 2,0 |
| V9 | V2 | 184,0 | 62,5 | 1,82 | 1,9 |
| V10 | V3 | 184,0 | 62,5 | 1,82 | 1,8 |
| V11 | V4 | 184,0 | 62,5 | 1,82 | 1,9 |
| V12 | V3 | 144,8 | 49,2 | 1,64 | 1,1 |

| Bsp. | Brennverhalten | | |
|---|---|---|---|
| | Flammbild | Nachbrennzeit (s) | Brennendes Abtropfen |
| 6 | schwach | 0 | nein |
| 7 | schwach | 1 | nein |
| 8 | schwach | 0 | ja |
| V9 | schwach | 5 | n.b. |
| V10 | n.b. | n.b. | nein |
| V11 | schwach | 9 | nein |
| V12 | intensiv | 17 | nein |

Es zeigte sich, dass die erfindungsgemäßen nicht-vernetzbaren Siliconzusammensetzungen gemäß der Beispiele 6 bis 8, welche erfindungsgemäße Siliziumpulver aus den Beispiel 2 bis 4 enthalten, welche gleichzeitig die Merkmale a) bis c) und sogar d) erfüllen, den erfindungsgemäßen Vorteil einer reduzierten Brennbarkeit zeigen.

Im erfindungsgemäßen Beispiel 8 zeigte sich zudem völlig überraschend, dass durch Mischen mehrerer nicht-erfindungsgemäßer Siliziumpulver eine erfindungsgemäße Siliziumpulver-Mischung gemäß Beispiel 4 erzeugt werden kann, welches die erfindungsgemäße vorteilhafte Eigenschaft einer geringen Brennbarkeit aufweist, sofern die erhaltene Mischung die Merkmale a) bis c) und sogar d) erfüllt.

**Beispiel 11** Herstellung einer nicht-vernetzbaren, thermoleitfähigen Siliconzusammensetzung enthaltend eine *in-situ* Mischung von Siliziumpulvern (erfindungsgemäß).

Gemäß der Allgemeinen Vorschrift AV1 wurde eine erfindungsgemäße nicht-vernetzbare thermoleitfähige Siliconzusammensetzung hergestellt, wobei als Siliziumpulver 18,4 g eines nicht-erfindungsgemäßen Siliziumpulvers, welches einen x50 von 68,6 $\mu$m, einen SPAN von 0,20, einen b/l von 0,85 und SPHT von 0,84 aufweist, 36,8 g des nicht-erfindungsgemäßen Siliziumpulvers aus Vergleichsbeispiel V2, 73,6 g eines nicht-erfindungsgemäßen Siliziumpulvers, welches einen x50 von 105,4 $\mu$m, einen SPAN von 0,24, einen b/l von 0,83 und SPHT von 0,92 aufweist, 36,8 g eines nicht-erfindungsgemäßen Siliziumpulvers, welches einen x50 von 133,8 $\mu$m, einen SPAN von 0,25, einen b/l von 0,82 und SPHT von 0,94 aufweist, und 18,4 g eines nicht-erfindungsgemäßen Siliziumpulvers, welches einen x50 von 162,1 $\mu$m, einen SPAN von 0,22, einen b/l von 0,82 und SPHT von 0,94 aufweist, getrennt voneinander zugegeben und *in-situ* unter Bildung einer erfindungsgemäßen Siliziumpulver-Mischung vermischt wurde.

Es wurde eine erfindungsgemäße nicht-vernetzbare Siliconzusammensetzung mit einem Gehalt an erfindungsgemäßen Siliziumpartikeln von 62,5 Vol.-% erhalten. Die thermische Leitfähigkeit betrug 1,9 W/mK und die Dichte 1,82 $g/cm^3$. Die erfindungsgemäße pastöse Masse weist eine gute Verarbeitbarkeit, eine hohe thermische Leitfähigkeit und eine niedrige Dichte auf und ist sehr gut für die Verwendung in elektronischen Bauteilen geeignet.

Die Brennbarkeitsprüfung gemäß Beispiel 10 ergab ein schwaches Flammbild, weniger als 1 Sekunde Nachbrennzeit und kein brenndendes Abtropfen.

**Patentansprüche**

1. Nicht-vernetzbare, wärmeleitfähige Siliconzusammensetzung (Y) enthaltend

   - 5-50 Vol.-% mindestens einer nicht-vernetzbaren Siliconzusammensetzung (S) und
   - 50-95 Vol.-% mindestens eines thermisch leitfähigen Füllstoffes (Z) mit einer Wärmeleitfähigkeit von mindestens 5 W/mK, mit der Maßgabe, dass

   die nicht-vernetzbare, wärmeleitfähige Siliconzusammensetzung (Y) eine thermische Leitfähigkeit von mindestens 0,6 W/mK hat, und dass
   mindestens 20 Vol-% metallische Siliziumpartikel als thermisch leitfähige Füllstoffe (Z) enthalten sind, welche folgende Merkmale erfüllen:

   a) ihr mittlerer Durchmesser x50 liegt im Bereich 30 - 200 μm;
   b) sie sind überwiegend rundlich, und **dadurch gekennzeichnet, dass** das Breite/Länge-Verhältnis (Aspekt-Verhältnis b/l) mindestens 0,76 beträgt;
   c) ihre Verteilungsbreite SPAN ((x90-x10)/x50) ist mindestens 0,28.

2. Nicht-vernetzbare Siliconzusammensetzung (Y) gemäß Anspruch 1, **dadurch gekennzeichnet, dass** die nicht-vernetzbaren Siliconzusammensetzung (S) Organopolysiloxane (T) enthält welche, die folgende Eigenschaften aufweisen:

   - sie sind linear, verzweigt oder zyklisch,
   - beidseitig endgestoppert oder einseitig Si-OH endständig oder einseitig alkoxy-silyl endständig,
   - die an Si-gebundenen Seiten- und Endgruppen R$^1$ sind unabhängig voneinander substituierte oder nicht-substituierte C1 bis C18 Kohlenwasserstoffgruppen.

3. Nicht-vernetzbare Siliconzusammensetzung (Y) gemäß Anspruch 2, **dadurch gekennzeichnet, dass** die nicht-vernetzbare Siliconzusammensetzung (S) zusätzlich Rheologieadditive (E) enthält, die zur Einstellung ihrer Standfestigkeit dienen.

4. Nicht-vernetzbare Siliconzusammensetzung (Y) gemäß einem der Ansprüche 1 bis 3, **dadurch gekennzeichnet, dass** sie mindestens 25 Vol-% metallische Siliziumpartikel als thermisch leitfähige Füllstoffe (Z) enthält.

5. Nicht-vernetzbare Siliconzusammensetzung (Y) gemäß einem der Ansprüche 1 bis 4, **dadurch gekennzeichnet, dass** sie neben den metallischen Siliziumpartikeln (Z) nur einen bis drei weitere thermisch leitfähige Füllstoffe (Z) enthält.

6. Nicht-vernetzbare Siliconzusammensetzung (Y) gemäß einem der Ansprüche 1 bis 5, **dadurch gekennzeichnet, dass** sie neben den metallischen Siliziumpartikeln (Z) höchstens 24 Gew.-% eines weiteren thermisch leitfähigen Füllstoffes (Z) mit einer Dichte von größer 5,0 g/cm$^3$ enthält.

7. Nicht-vernetzbare Siliconzusammensetzung (Y) gemäß einem der Ansprüche 1 bis 6, **dadurch gekennzeichnet, dass** sie neben den metallischen Siliziumpartikeln (Z) höchstens 60 Gew.-% eines weiteren thermisch leitfähigen Füllstoffes (Z) mit einer Dichte von größer 3,0 g/cm$^3$ enthält.

8. Nicht-vernetzbare Siliconzusammensetzung (Y) gemäß einem der Ansprüche 1 bis 7, **dadurch gekennzeichnet, dass** die metallischen Siliziumpartikel (Z) einen Sphärizitätswert SPHT von mindestens 0,75 aufweisen.

9. Nicht-vernetzbare Siliconzusammensetzung (Y) gemäß einem der Ansprüche 1 bis 8, **dadurch gekennzeichnet, dass** der mittlere Durchmesser x50 der metallischen Siliziumpartikel im Bereich von 40 - 180 μm liegt.

10. Nicht-vernetzbare Siliconzusammensetzung (Y) gemäß einem der Ansprüche 1 bis 9, **dadurch gekennzeichnet, dass** die metallischen Siliziumpartikel (Z) noch folgendes weitere Merkmal erfüllen:
    d) sie enthalten höchstens 1,5 Gew.-% Siliziumpartikel kleiner 2 μm.

11. Verfahren zur Herstellung der erfindungsgemäßen nicht-vernetzbaren Siliconzusammensetzungen (Y) gemäß einem der Ansprüche 1 bis 9 durch Vermischen der einzelnen Komponenten.

12. Verwendung der nicht-vernetzbaren Siliconzusammensetzung (Y) gemäß einem der Ansprüche 1 bis 10 als Thermoleitpaste zur Ableitung von Wärme von Wärmerzeugern in elektronischen Apparaturen.

**Claims**

1. Non-crosslinkable, heat-conducting silicone composition (Y) comprising

    - 5-50% by volume of at least one non-crosslinkable silicone composition (S) and
    - 50-95% by volume of at least one thermally conductive filler (Z) having a thermal conductivity of at least 5 W/mK, with the proviso that

      the non-crosslinkable, thermally conductive silicone composition (Y) has a thermal conductivity of at least 0.6 W/mK, and that
      at least 20% by volume of metallic silicon particles that are present as thermally conductive fillers (Z) fulfil the following features:

        a) their median diameter x50 is in the range of 30-200 $\mu$m;
        b) they are predominately rounded, and **characterized in that** the width/length ratio (aspect ratio w/l) is at least 0.76;
        c) their distribution range SPAN ((x90-x10)/x50) is at least 0.28.

2. Non-crosslinkable silicone composition (Y) according to Claim 1, **characterized in that** the non-crosslinkable silicone composition (S) contains organopolysiloxanes (T) that have the following properties:

    - they are linear, branched or cyclic,
    - end-capped at both ends or singly Si-OH terminated or singly alkoxy-silyl terminated,
    - the Si-bonded side and end groups $R^1$ are independently substituted or unsubstituted C1 to C18 hydrocarbon groups.

3. Non-crosslinkable silicone composition (Y) according to Claim 2, **characterized in that** the non-crosslinkable silicone composition (S) additionally contains rheology additives (E) that serve to adjust its stability under load.

4. Non-crosslinkable silicone composition (Y) according to any of Claims 1 to 3, **characterized in that** it contains at least 25% by volume of metallic silicon particles as thermally conductive fillers (Z).

5. Non-crosslinkable silicone composition (Y) according to any of Claims 1 to 4, **characterized in that**, aside from the metallic silicon particles (Z), it contains only one to three further thermally conductive fillers (Z).

6. Non-crosslinkable silicone composition (Y) according to any of Claims 1 to 5, **characterized in that**, aside from the metallic silicon particles (Z), it contains not more than 24% by weight of a further thermally conductive filler (Z) having a density of greater than 5.0 g/cm$^3$.

7. Non-crosslinkable silicone composition (Y) according to any of Claims 1 to 6, **characterized in that**, aside from the metallic silicon particles (Z), it contains not more than 60% by weight of a further thermally conductive filler (Z) having a density of greater than 3.0 g/cm$^3$.

8. Non-crosslinkable silicone composition (Y) according to any of Claims 1 to 7, **characterized in that** the metallic silicon particles (Z) have a sphericity value SPHT of at least 0.75.

9. Non-crosslinkable silicone composition (Y) according to any of Claims 1 to 8, **characterized in that** the median diameter x50 of the metallic silicon particles is in the range of 40-180 $\mu$m.

10. Non-crosslinkable silicone composition (Y) according to any of Claims 1 to 9, **characterized in that** the metallic silicon particles (Z) fulfil the following further feature:
    d) they contain not more than 1.5% by weight of silicon particles smaller than 2 $\mu$m.

11. Process for producing the inventive non-crosslinkable silicone compositions (Y) according to any of Claims 1 to 9 by mixing the individual components.

**12.** Use of the non-crosslinkable silicone composition (Y) according to any of Claims 1 to 10 as thermal paste for dissipation of heat from heat generators in electronic apparatuses.

**Revendications**

**1.** Composition de silicone (Y) non réticulable, thermoconductrice contenant

- 5-50% en volume d'au moins une composition de silicone (S) non réticulable et
- 50-95% en volume d'au moins une charge (Z) thermoconductrice présentant une conductivité thermique d'au moins 5 W/mK, à condition que

la composition de silicone (Y) non réticulable thermoconductrice présente une conductivité thermique d'au moins 0,6 W/mK et que
au moins 20% en volume de particules métalliques de silicium soient contenues en tant que charges (Z) thermoconductrices, qui satisfont aux caractéristiques suivantes :

a) leur diamètre moyen x50 se situe dans la plage de 30 à 200 $\mu$m ;
b) elles sont principalement rondes et **caractérisées en ce que** le rapport largeur/longueur (rapport d'aspect l/L) est d'au moins 0,76 ;
c) leur largeur de distribution SPAN ((x90-x10)/x50) est d'au moins 0,28.

**2.** Composition de silicone (Y) non réticulable selon la revendication 1, **caractérisée en ce que** la composition de silicone (S) non réticulable contient des organopolysiloxanes (T) qui présentent les propriétés suivantes :

- ils sont linéaires, ramifiés ou cycliques,
- ils sont bloqués aux deux extrémités ou ils présentent d'un côté Si-OH en position d'extrémité ou ils présentent d'un côté alcoxysilyle en position extrémité,
- les groupes latéraux et terminaux R$^1$ liés à Si représentent, indépendamment les uns des autres, des groupes hydrocarbonés en C1 à C18 substitués ou non substitués.

**3.** Composition de silicone (Y) non réticulable selon la revendication 2, **caractérisée en ce que** la composition de silicone (S) non réticulable contient en outre des additifs rhéologiques (E) qui servent au réglage de leur stabilité.

**4.** Composition de silicone (Y) non réticulable selon l'une des revendications 1 à 3, **caractérisée en ce qu'**elle contient au moins 25% en volume de particules métalliques de silicium en tant que charges (Z) thermoconductrices.

**5.** Composition de silicone (Y) non réticulable selon l'une des revendications 1 à 4, **caractérisée en ce qu'**elle ne contient, outre les particules métalliques de silicium (Z), qu'une à trois autres charges (Z) thermoconductrices.

**6.** Composition de silicone (Y) non réticulable selon l'une des revendications 1 à 5, **caractérisée en ce qu'**elle contient, outre les particules métalliques de silicium (Z), au plus 24% en poids d'une autre charge (Z) thermoconductrice présentant une masse volumique supérieure à 5,0 g/cm$^3$.

**7.** Composition de silicone (Y) non réticulable selon l'une des revendications 1 à 6, **caractérisée en ce qu'**elle contient, outre les particules métalliques de silicium (Z), au plus 60% en poids d'une autre charge (Z) thermoconductrice présentant une masse volumique supérieure à 3,0 g/cm$^3$.

**8.** Composition de silicone (Y) non réticulable selon l'une des revendications 1 à 7, **caractérisée en ce que** les particules métalliques de silicium (Z) présentent une valeur de sphéricité SPHT d'au moins 0,75.

**9.** Composition de silicone (Y) non réticulable selon l'une des revendications 1 à 8, **caractérisée en ce que** le diamètre moyen x50 des particules métalliques de silicium se situe dans la plage de 40 à 180 $\mu$m.

**10.** Composition de silicone (Y) non réticulable selon l'une des revendications 1 à 9, **caractérisée en ce que** les particules métalliques de silicium (Z) respectent encore la caractéristique supplémentaire suivante :

d) elles contiennent au plus 1,5% en poids de particules de silicium inférieures à 2 $\mu$m.

11. Procédé de préparation des compositions de silicone (Y) non réticulables selon l'invention selon l'une des revendications 1 à 9 par mélange des composants individuels.

12. Utilisation de la composition de silicone (Y) non réticulable selon l'une des revendications 1 à 10 en tant que pâte thermoconductrice pour la dissipation de chaleur de générateurs de chaleur dans des appareils électroniques.

**FIG. 1**

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2019131669 A
- US 2016122611 A
- US 2007135555 A
- US 2007117920 A

- US 2001051673 A
- US 4292223 A
- US 2006228542 A

**In der Beschreibung aufgeführte Nicht-Patentliteratur**

- **SCHATT** ; **WERNER** ; **WIETERS** ; **KLAUS-PETER** ; **KIEBACK**. *Pulvermetallurgie: Technologien und Werkstoffe*, ISBN 978-3-540-681112-0, 5-48, https://doi.org/10.1007/978-3-540-68112-0_2